# EUROPEAN PATENT APPLICATION

(11) **EP 4 745 899 A2**
(43) Date of publication of application: **20.05.2026**
(21) Application number: 26169450.9
(22) Date of filing: 31.03.2026
(51) Int. Cl.: G06T 15/04

(54) **METHOD AND APPARATUS FOR GENERATING 3D MODEL, AND DEVICE**

(30) Priority: 12.11.2025 CN 202511653495
(71) Applicant: XG TECH PTE. LTD., Singapore 179098 (SG)
(72) Inventor: LIN, Tao, 179098 Singapore (SG); GONG, Yichen, 179098 Singapore (SG); HU, Wenxiao, 179098 Singapore (SG); CHEN, Long, 179098 Singapore (SG)
(74) Representative: v. Bezold & Partner Patentanwälte - PartG mbB

(57) **Abstract**

Disclosed are a method and apparatus for generating a 3D model, and a device. The method comprises: acquiring at least one 3D base model corresponding to a current environment where a vehicle is located, and a basic layout rule for the at least one 3D base model; determining, in response to received user-input style description content, a target style for the at least one 3D base model; determining, based on the target style, at least one set of texture files matching the target style, and applying the at least one set of texture files to a respective 3D base model of the at least one 3D base model, to obtain at least one target 3D model of the target style; arranging the at least one target 3D model based on the basic layout rule; and performing real-time rendering and display of the arranged at least one target 3D model.

## Description

### TECHNICAL FIELD

The present disclosure relates to technical field of computer graphics, and in particular, to a method and apparatus for generating a three-dimensional (3D) model, and a device.

### BACKGROUND

With development of smart vehicle technology and growth of user requirements for personalized experiences, it has become an extremely attractive development direction to render, in real time in an in-vehicle human-machine interface (HMI), a virtual environment which corresponds to an external world and is yet artistically processed.

In conventional technologies, creating a 3D architectural model with a unified artistic style for a large-scale urban environment relies on a team of professional 3D artists to invest a significant amount of time in manual modeling, texture painting, and layout, which is a costly and time-consuming process, making it difficult to quickly respond to a user requirement for a personalized style, thereby resulting in low efficiency in generating a 3D model meeting a user requirement for a personalized style.

Thus, it has become a problem, urgently needing to be solved, how to automatically generate a 3D architectural model meeting a user requirement for a personalized style.

### SUMMARY

To solve the technical problems, the present disclosure provides a method and apparatus for generating a 3D model, and a device, capable of automatically generating a 3D architectural model meeting a user requirement for a personalized style, thereby solving the problem of low efficiency in generating a 3D model meeting a user requirement for a personalized style.

One aspect provides a method for generating a 3D model, comprising:
acquiring at least one 3D base model corresponding to a current environment where a vehicle is located, and a basic layout rule for the at least one 3D base model;
determining, in response to received user-input style description content, a target style for the at least one 3D base model;
determining, based on the target style, at least one set of texture files matching the target style, and applying the at least one set of texture files to a respective 3D base model of the at least one 3D base model, to obtain at least one target 3D model of the target style, wherein the one set of texture files comprise maps for the 3D model from different views;
arranging the at least one target 3D model based on the basic layout rule; and
performing real-time rendering and display of the arranged at least one target 3D model.

Another aspect provides an apparatus for generating a 3D model, comprising:
a first acquirement module, configured to acquire at least one 3D base model corresponding to a current environment where a vehicle is located, and a basic layout rule for the at least one 3D base model;
a first determination module, configured to, determine, in response to received user-input style description content, a target style for the at least one 3D base model;
a second determination module, configured to determine, based on the target style, at least one set of texture files matching the target style;
a first processing module, configured to apply the at least one set of texture files to a respective 3D base model of the at least one 3D base model, to obtain at least one target 3D model of the target style;
a model arranging module, configured to arrange the at least one target 3D model based on the basic layout rule; and
a rendering and display module, configured to perform real-time rendering and display of the arranged at least one target 3D model.

In yet another aspect, a computer program product is provided in an embodiment of the present disclosure. When instructions in the computer program product are executed by a processor, the method for generating a 3D model according to the first aspect of the present disclosure is performed.

In still another aspect, an electronic device is provided, the electronic device comprising: a processor; and a memory for storing processor-executable instructions; wherein the processor is configured to read the executable instructions from the memory and execute the instructions to implement the method for generating a 3D model according to the first aspect described above.

According to the solution of the present disclosure, since the pre-generated 3D base model corresponding to the environment where the vehicle is located and the basic layout rule nay be acquired, and maps matching the target style are obtained and applied to the 3D base model according to the user's style requirement, the target 3D model meeting the user's style requirement may be generated, so that multiple stylized 3D models are arranged based on the basic layout rule, and real-time rendering and display of the arranged multiple stylized 3D models are performed, thereby allowing the user to see a stylized virtual world corresponding to the real world. Thus, compared to the manual modeling mode in the conventional technologies, the solution of the present disclosure enables to automatically generate a 3D architectural model meeting a user requirement for a personalized style, thereby improving the efficiency of stylized 3D model generation.

### BRIEF DESCRIPTION OF DRAWINGS

FIG. 1 is a schematic diagram of an automatic generation system for a dense urban environment in accordance with an exemplary embodiment of the present disclosure.
FIG. 2 is a schematic flowchart of a method for generating a 3D model in accordance with an exemplary embodiment of the present disclosure.
FIG. 3 is a schematic flowchart of a method for generating a 3D model in accordance with another exemplary embodiment of the present disclosure.
FIG. 4 is a schematic flowchart of a method for generating a 3D model in accordance with yet another exemplary embodiment of the present disclosure.
FIG. 5 is a schematic flowchart of a method for generating a 3D model in accordance with still another exemplary embodiment of the present disclosure.
FIG. 6 is a schematic flowchart of a method for generating a 3D model in accordance with yet another exemplary embodiment of the present disclosure.
FIG. 7 is a schematic structural diagram of an apparatus for generating a 3D model in accordance with yet another exemplary embodiment of the present disclosure.
FIG. 8 is a structural diagram of an electronic device in accordance with an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are only part, not all, of the embodiments of the present disclosure. It should be understood that the present disclosure is not limited by the exemplary embodiments.

It should be noted that unless otherwise specified, the relative arrangement, numerical expressions, and numerical values of components and steps set forth in these embodiments do not limit the scope of the present disclosure.

### Application Overview

In conventional technologies, creating a 3D architectural model with a unified artistic style for a large-scale urban environment relies on a team of professional 3D artists to invest a significant amount of time in manual modeling, texture painting, and layout, and in manual placement and adjustment in an engine, to construct the 3D model for the urban scene, which is a costly and time-consuming process. Once a user changes the style requirement, manual remodeling by professional technical personnel is required, making it difficult to quickly respond to a user requirement for a personalized style, thereby resulting in low efficiency in generating a 3D model meeting a user requirement for a personalized style.

Meanwhile, in some related technologies, techniques such as photogrammetry are used to reconstruct a 3D urban model from real-world aerial images, or post-processing is applied to an existing 3D model or scene, using some global style filters, such as changing tone, contrast, etc. However, the former often contains a large amount of redundant data, and is of chaotic topology, making it difficult to perform artistic style modification and real-time rendering optimization, while the latter, through the global filters, may only change a final rendered image, and cannot penetrate to the material and texture level of the 3D model, therefore failing to achieve deep, consistent artistic style conversion.

Thus, it has become a problem, urgently needing to be solved, how to automatically generate a 3D architectural model meeting a user requirement for a personalized style.

Based on the above technical problems, according to the solution of the present disclosure, since the pre-generated 3D base model corresponding to the environment where the vehicle is located along with a basic layout rule may be acquired, and maps matching the target style are obtained and applied to the 3D base model according to the user's style requirement, the target 3D model meeting the user's style requirement may be generated, so that multiple stylized 3D models are arranged based on the basic layout rule, and real-time rendering and display of the arranged multiple stylized 3D models are performed, thereby allowing the user to see a stylized virtual world corresponding to the real world. Thus, compared to the manual modeling mode in the conventional technologies, the solution of the present disclosure enables to automatically generate a 3D architectural model meeting a user requirement for a personalized style, thereby improving the efficiency of stylized 3D model generation.

### Exemplary System

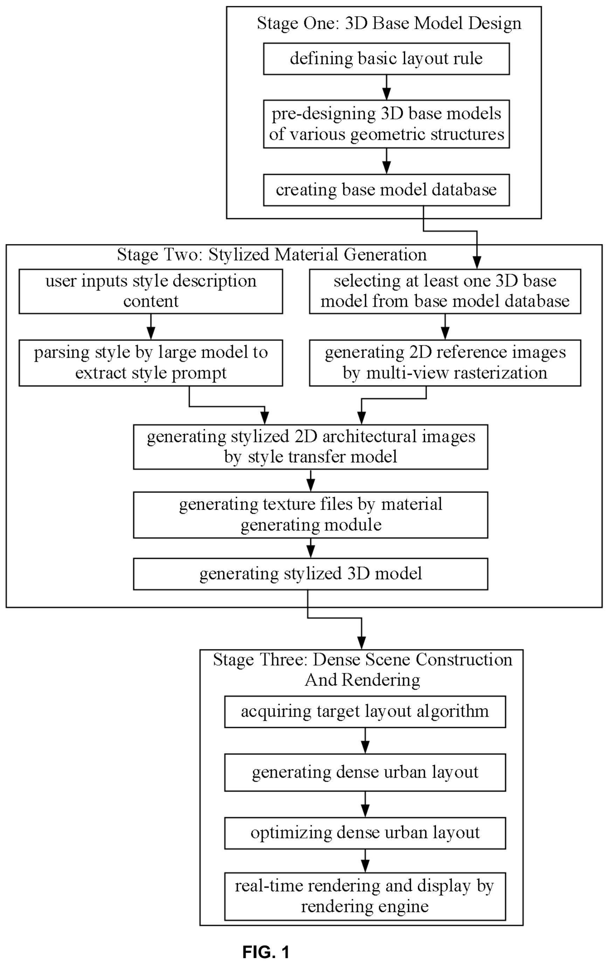

FIG. 1 is a schematic diagram of an automatic generation system for a dense urban environment in accordance with an exemplary embodiment of the present disclosure. The system achieves an efficient and flexible automated content production flow by decoupling architectural layout, style generation, and scene construction, wherein as shown in FIG. 1, the system mainly includes three core stages: 3D base model design, stylized material generation, and dense scene construction and rendering.

In some examples, the stage one, the 3D base model design, may include: defining the basic layout rule between 3D base models, pre-designing 3D base models of various geometric structures, and creating a base model database. After a professional technical personnel pre-designs the 3D base models of various geometric structures and defines the layout rule between the 3D base models, the 3D base models of various geometric structures and the basic layout rule may be stored in the base model database, to facilitate subsequently acquiring respective 3D base models directly from the base model database.

In some examples, the stage two, stylized material generation, may include a process as follows.
(1) After the user inputs style description content, in response to the style description content, style parsing is performed, based on a large model, on the style description content to extract style prompt (i.e., visual descriptors), and a target style is determined based on the style prompt.
(2) The current environment where the vehicle is located is determined based on an environmental perception technology for the vehicle, and at least one 3D base model corresponding to the current environment where the vehicle is located is acquired from the base model database; multi-view rasterization is performed on each of the at least one 3D base model to generate multiple two-dimensional (2D) reference images.
(3) A style transfer model is guided using the target style to process the multiple 2D reference images, to generate multiple stylized 2D architectural images; and the multiple 2D architectural images are processed based on a material generation model, to generate a set of texture files (i.e., materials), and the set of texture files is applied to a respective 3D base model to obtain a stylized 3D model.

In some examples, the stage three, dense scene construction and rendering, may include a process of: first, acquiring a target layout algorithm and the basic layout rule, and arranging at least one stylized 3D model based on the target layout algorithm and the basic layout rule, to generate a dense urban layout; afterwards, the dense urban layout may also be optimized (for example, culling an occluded and invisible 3D model), and then, real-time rendering is performed on the optimized dense urban layout using a rendering engine, and the rendered image is displayed on screen.

For detailed description of the stages, reference may be made to detailed description in the following embodiments, which are not repeated here in embodiments of the present disclosure.

According to the solution of the present disclosure, since the pre-generated 3D base model corresponding to the environment where the vehicle is located and the basic layout rule may be acquired, and maps matching the target style are obtained and applied to the 3D base model according to the user's style requirement, the target 3D model meeting the user's style requirement can be generated. Thus, compared to the manual modeling mode in the conventional technologies, the solution of the present disclosure enables to automatically generate a 3D architectural model meeting a user requirement for a personalized style, thereby improving the efficiency of stylized 3D model generation.

Moreover, as multiple stylized 3D models may be arranged based on the basic layout rule, and real-time rendering may be performed on the arranged multiple stylized 3D models to be displayed, seamless and dense arrangement between the architectural models is ensured, to construct a visually rich urban environment without a sense of hollowness, thereby allowing the user to see a dynamic, stylized virtual world corresponding to the real world.

### Exemplary Method

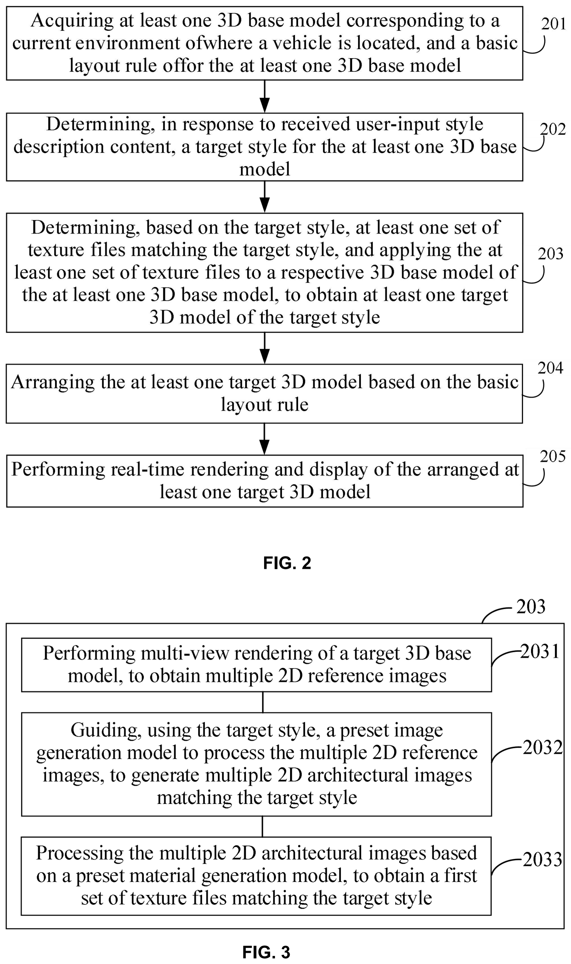

FIG. 2 is a schematic flowchart of a method for generating a 3D model in accordance with an exemplary embodiment of the present disclosure. This embodiment may be applied to an electronic device (for example, a vehicle), that is, the entity executing this embodiment may be a vehicle or a chip in the vehicle.

For example, as shown in FIG. 2, the method may include steps as follows.

### Step 201, Acquiring at least one 3D base model corresponding to a current environment where a vehicle is located, and a basic layout rule for the at least one 3D base model

In some embodiments, when the vehicle is in an autonomous driving scene or a navigation scene, the vehicle may determine the current environment where the vehicle is located based on positioning technology (for example, lidar, global navigation satellite system, or visual positioning) and a high-definition map, and acquire, from a base model database, at least one 3D base model corresponding to the current environment where the vehicle is located, and a basic layout rule for the at least one 3D base model. The base model database may be a local base model database or a server-side base model database.

In some embodiments, the basic layout rule defines a rule for connecting and combining the different models, to provide a basis for subsequent arrangement of different 3D models.

For example, the basic layout rule may include but is not limited to: a standardized grid system (for example, of 10x10 meter basic plots), and setting standardized connection points or sockets at edges and specific positions of the 3D base models, and classifying the connection points (such as street interfaces and roof interfaces) of the 3D base models, etc.

In some examples, a professional designer may pre-create a series of 3D base models using a 3D modeling software, such as Blender, Maya, etc., or generate a series of 3D base models with the aid of a procedural algorithm L-System, wherein the series of 3D base models may include 3D base models of different objects (such as roads, rivers, buildings, or trees) with different contours, heights, and structural features; and wherein the 3D base models may be of basic 3D geometric shapes, and low-polygon-count 3D geometric shapes are employed for all the 3D base models. For example, taking a 3D base model for a building as an example, the building may include tower buildings, slab buildings, L-shaped buildings, buildings with roofs of different slopes, etc. Afterwards, the generated series of 3D base models may be uniformly stored in the database, wherein for example, the generated series of 3D base models may be uniformly stored in a local database or a server-side database.

For example, assuming that the current environment where the vehicle is located is a downtown intersection, wherein the downtown intersection involves a hospital, roads, and a shopping mall. After determining that the current environment where the vehicle is located is the downtown intersection, 3D base models corresponding respectively to the hospital, the roads, and the shopping mall, as well as attribute information of the three 3D base models, may be acquired from the local base model database, and then, the basic layout rule between the three 3D base models may be determined based on the attribute information of the three 3D base models.

### Step 202, Determining, in response to received user-input style description content, a target style for the at least one 3D base model

In some examples, the style description content may be text-type style description content input by the user on a human-machine interaction screen, speech-type style description content input by the user based on a speech function, an identifier selected by the user in a menu interface for indicating the style description content, or image-type style description content serving as a style reference. The target style may be key prompt words configured to describe the target style.

For example, taking the style description content being text-type as an example. When the user inputs style description content of "Chinese ink painting style" on the vehicle's central control screen, the style description content is analyzed, to determine that the target style for the at least one 3D base model may be represented by the style prompt "black, white, and gray tones; Xuan paper texture; brush strokes; ink blot diffusion".

### Step 203, Determining, based on the target style, at least one set of texture files matching the target style, and applying the at least one set of texture files to a respective 3D base model of the at least one 3D base model, to obtain at least one target 3D model of the target style

The set of texture files include maps for the 3D model from different views.

In some examples, the at least one set of texture files refer to physically based rendering (PBR) texture files, wherein the maps for the 3D model from different views may include: albedo maps, roughness maps, metallic maps, normal maps, etc.

In some examples, the at least one set of texture files may be pre-generated or generated in real time.

In some embodiments, when the at least one set of texture files are pre-generated, in response to a plurality of sets of texture files of a plurality of styles including the target style being pre-stored in cloud, the at least one set of texture files matching the target style may be acquired from the plurality of sets of texture files, and the at least one set of texture files may be applied to the respective 3D base model of the at least one 3D base model, to obtain the at least one target 3D model.

For example, assuming that the plurality of sets of texture files are pre-stored in the cloud, the plurality of sets of texture files include Chinese ink painting style texture files A and steampunk style texture files B. When the target style is Chinese ink painting style, a request may be sent to the cloud to obtain at least one set of texture files matching the current environment where the vehicle is located from the Chinese ink painting style texture files stored in the cloud.

In other embodiments, when the at least one set of texture files are generated in real time, the at least one 3D base model may first be rasterized to obtain the multi-view images, and the multi-view images are converted into the architectural images of the target style. Then, the at least one set of texture files of the target style is generated based on the architectural images of the target style, for specifics of which, reference may be made to the detailed description in the following embodiments, which is not repeated here in embodiments of the present disclosure.

In some embodiments, when the at least one stylized target 3D model is pre-generated, in response to a plurality of 3D models, with different styles applied, for different geographical locations being pre-stored in a cloud, the at least one target 3D model matching the current environment and the target style is acquired from the plurality of 3D models.

For example, assuming that a plurality of 3D models, with different styles applied, for different geographical locations being pre-stored in a cloud, the plurality of 3D models include a Chinese ink painting style 3D model for a downtown location and a Chinese ink painting style 3D model for a residential area. When the target style is Chinese ink painting style and the current environment where the vehicle is located is a downtown location, a request may be sent to the cloud to obtain the Chinese ink painting style 3D model for the downtown location from the plurality of 3D models stored in the cloud.

In some examples, the applying the at least one set of texture files to a respective 3D base model of the at least one 3D base model, to obtain at least one target 3D model of the target style refers to the process of binding physical property maps from different views corresponding to each base model to the respective 3D base model, to convert the 3D base model of a "blank geometric shape" into a target 3D model "with appearance of real physical materials", that is, compared to the texture-less 3D base model, the target 3D model is a 3D model with materials. It should be noted that for the process of applying the at least one set of texture files to a respective 3D base model of the at least one 3D base model, reference may be made to the detailed description in related technologies, which is not repeated here in embodiments of the present disclosure.

### Step 204, Arranging the at least one target 3D model based on the basic layout rule

In some examples, since the basic layout rule defines the rule for connecting 3D models, a procedural layout engine may be used to arrange the at least one target 3D model based on the basic layout rule, to ensure that precise, seamless procedural combination may be achieved between the models, thereby obtaining the arranged at least one target 3D model.

For example, assuming that the at least one target 3D model includes 3D model A, 3D model B, and 3D model C. If the basic layout rule defines, based on types and connection points of the 3D models, that 3D model A is adjacent to 3D model C, and that 3D model C is adjacent to 3D model B, the 3D models A to C may be arranged based on the basic layout rule, so that: 3D model A is connected to 3D model C, and 3D model C is connected to 3D model B, i.e., 3D model A -- 3D model C -- 3D model B.

### Step 205, Performing real-time rendering and display of the arranged at least one target 3D model

In some examples, the arranged at least one target 3D model may be loaded into a real-time 3D rendering engine (Unreal Engine, rendering engine Unity, etc., for example) of a target platform (an in-vehicle human-machine interface, for example), and real-time rendering of the arranged at least one target 3D model may be performed at a preset frame rate (60 FPS, for example) using the real-time 3D rendering engine according to preset virtual camera position and orientation to generate an image sequence, and the image sequence is displayed on a display device. Thus, an immersive, dynamic, uniformly stylized virtual world corresponding to the external world is presented to the user through the display device.

According to the solution of the present disclosure, since the pre-generated 3D base model corresponding to the environment where the vehicle is located and the basic layout rule may be acquired, and maps matching the target style are obtained and applied to the 3D base model according to the user's style requirement, the target 3D model meeting the user's style requirement may be generated, so that multiple stylized 3D models are arranged based on the basic layout rule, and real-time rendering and display of the arranged multiple stylized 3D models are performed, thereby allowing the user to see a stylized virtual world corresponding to the real world. Thus, compared to the manual modeling mode in the conventional technologies, the solution of the present disclosure enables to automatically generate a 3D architectural model meeting a user requirement for a personalized style, thereby improving the efficiency of stylized 3D model generation.

As shown in FIG. 3, based on the embodiment shown in FIG. 2, the step 203 may include steps as follows.

### Step 2031, Performing multi-view rendering of a target 3D base model, to obtain multiple 2D reference images

The target 3D base model is any one of the at least one 3D base model, and the multiple 2D reference images correspond respectively to the different views.

In some embodiments, for a target 3D base model of the at least one 3D base model, by setting a standardized set of multi-view virtual cameras in a virtual 3D space, rendering of the target 3D base model (i.e., texture-less base model) is performed, to generate 2D reference images (also referred to as "line art") that may accurately depict the contour and structure of the target 3D base model, and perspective relationships of the target 3D base model from different views, wherein the set of multi-view virtual cameras may respectively cover six-view perspectives (covering key perspectives such as of front, side, top views, and 45-degree angle, etc., for example), or may also include other possible key perspectives, which is not limited in embodiments of the present disclosure, and is determined according to specific usage situations.

### Step 2032, Guiding, using the target style, a preset image generation model to process the multiple 2D reference images, to generate multiple 2D architectural images matching the target style

In some examples, the image generation model may be a conditional image generation model, for example, a stable diffusion model integrated with a control network Stable Diffusion with ControlNet, or a stable diffusion model powered by an image prompt adapter Stable Diffusion powered by IP-Adapter. Using the style prompt representing the target style and the multiple 2D reference images as input to the conditional image generation model, a geometric structure following each 2D reference image is generated based on the conditional image generation model while applying the target style to the image content, that is, the target style and the structures of the multiple 2D reference images are fused, to obtain multiple 2D architectural images corresponding to the multiple 2D reference images, wherein the multiple 2D architectural images are visually unified in the target style, and remain consistent with the multiple 2D reference images (i.e., the original 3D base model corresponding to the multiple 2D reference images) in geometric structure.

### Step 2033, Processing the multiple 2D architectural images based on a preset material generation model, to obtain a first set of texture files matching the target style

The first set of texture files is any one set of texture files of the at least one set of texture files.

In some examples, the material generation model may be a multimodal diffusion model Material-Anything, a diffusion model Text2Material that generates material maps based on text descriptions, or other possible material generation models. Assuming the material generation model is the Material-Anything model, the multiple 2D architectural images are input into the Material-Anything model; visual features of the multiple 2D architectural images are extracted based on the Material-Anything model; and a set of texture files, i.e., the first set of texture files, which match the size and style of the multiple 2D architectural images, are generated based on semantic features related to the target style and structural features included in the visual features. For specific detailed description of the Material-Anything model generating the texture files, reference may be made to the description in related technologies, which is not repeated here in embodiments of the present disclosure.

In some embodiments, the step 2033 may specifically include: rendering a respective one of the at least one target 3D model according to the preset multiple views, to generate multiple 2D rendered images; determining a perceptual loss based on the multiple 2D rendered images and the corresponding multiple 2D reference images; and adjusting the first set of texture files using the perceptual loss, to minimize a perceptual loss corresponding to the adjusted first set of texture files.

In some examples, the preset multiple views are the same as the views for generating the 2D reference images in the above embodiment, wherein for example, the preset multiple views may include six views covering key perspectives such as of front, side, top views, and 45-degree angles.

In some embodiments, the preset multiple views are the virtual camera orientations and positions; based on the virtual camera orientations and positions, the rendering engine is used to render each of the at least one target 3D model, to generate a 2D rendered image corresponding to each of the views; and image feature extraction is performed on the 2D rendered image from each of the views and the corresponding 2D reference image, and the perceptual loss between rendered image features and reference image features may be calculated using a pre-trained deep neural network, to adjust the first set of texture files through a backpropagation algorithm. Rendering is performed again based on the adjusted first set of texture files to generate multiple 2D rendered images, the perceptual loss is calculated, the above process is iteratively executed analogously, and the iteration stops when a maximum number of iterations is reached or the perceptual loss corresponding to the first set of texture files is less than a preset threshold, therefore minimizing the perceptual loss corresponding to the adjusted first set of texture files, thereby finally obtaining the optimized first set of texture files. Thus, the visual quality of the texture files and adaptability thereof to the 3D model are improved.

With the technical solution in accordance with the embodiments of the present disclosure, multi-view rendering of a target 3D base model is performed, to obtain multiple 2D reference images, an image generation model is guided using the target style to process the multiple 2D reference images, to generate multiple 2D architectural images matching the target style; and then, the multiple 2D architectural images are processed based on a material generation model, to obtain a set of texture files matching the target style. Therefore, through the solution, a set of texture files that are visually unified in style and consistent with the original base model in geometric structure are generated in real time.

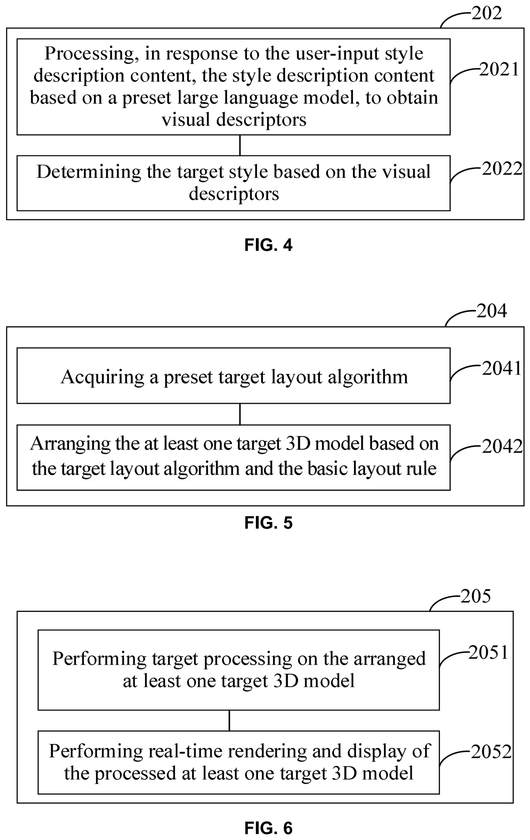

As shown in FIG. 4, based on the embodiment shown in FIG. 2, the step 202 may specifically include step 2021 and step 2022 as follows.

### Step 2021, Processing, in response to the user-input style description content, the style description content based on a preset large language model, to obtain visual descriptors

In some examples, the large language model may be a multimodal language model. For example, the large language model may be a Generative Pre-trained Transformer 4 with Vision (GPT-4V), wherein GPT-4V is a large model which supports analyzing both image and text information; for another example, the large language model may also be a fine-tuned Contrastive Language-Image Pretraining (CLIP) model.

For example, take the large language model being GPT-4V as an example. When the user inputs style description content "Chinese ink painting style" on an in-vehicle infotainment system, in response to the style description content, semantic analysis and parsing is performed on the style description content based on GPT-4V, to obtain a series of specific visual descriptors "black, white, and gray tones; Xuan paper texture; brush strokes; ink blot diffusion", which may also be referred to as style prompt.

### Step 2022, Determining the target style based on the visual descriptors

In some embodiments, after acquiring the visual descriptors, the visual descriptors may be determined as style prompt for the target style, thereby determining, based on the style prompt, that the style of the 3D model to be generated is the target style.

With the technical solution in accordance with the embodiments of the present disclosure, in response to the user-input style description content, the style description content is processed based on a preset large language model, to obtain visual descriptors, and the target style is determined based on the visual descriptors. Therefore, the vague natural language input by the user may be converted accurately into structured visual descriptors through the semantic understanding by the large model, thereby not only realizing interaction with the user but also accurately parsing the user's style requirement.

As shown in FIG. 5, based on the embodiment shown in FIG. 2, the step 204 may specifically include step 2041 and step 2042 as follows.

### Step 2041, Acquiring a preset target layout algorithm

In some examples, the target layout algorithm may be a Wave Function Collapse (WFC) algorithm, or other exemplary-sample-based generation algorithms. The target layout algorithm defines the position, rotation, scaling, and type of each architectural instance (e.g., stylized target 3D model) in 3D space, as well as local adjacency rules and constraint rules between models.

For example, take the target layout algorithm being the WFC algorithm as an example. By analyzing and learning the local adjacency rules (such as connection point matching) which are satisfied between architectural models, the WFC algorithm generates, by iterative constraint propagation, an architectural layout scheme that appears natural at a macro level and is conflict-free at a micro level. Additionally, macro-level planning may be superimposed, wherein for example, a height map is generated using Perlin noise to control building density and skyline of a virtual urban area to be generated, or pre-set main roads, parks, and other structures to guide the layout.

In some embodiments, the layout rule between architectural models (e.g., stylized target 3D models) may be determined by learning and analyzing exemplary samples of different styles and urban locations in advance, to obtain the target layout algorithm, and the target layout algorithm may be deployed locally or in the cloud. When it is necessary to arrange the at least one stylized target 3D model, the target layout algorithm may be called from the cloud or locally.

### Step 2042, Arranging the at least one target 3D model based on the target layout algorithm and the basic layout rule

In some examples, a procedural layout engine may be used to: determine, based on the WFC algorithm, target 3D models that may be adjacent to each other and target 3D models that are prohibited from being adjacent to each other among the at least one target 3D model; then, determine, in view of the basic layout rule, a layout scheme for the at least one target 3D model; and arrange the at least one target 3D model based on the layout scheme, to generate a digital layout blueprint that satisfies respective constraints of the WFC algorithm and the basic layout rule, that is, physical non-collision, coherence of a road system, and aesthetic principles of urban planning, etc., may be considered simultaneously in the digital layout blueprint, which ensures seamless and dense arrangement of each target 3D model, to construct a visually rich urban environment without a sense of hollowness.

For example, take the target layout algorithm being a rule for layout for a Jiangnan water town as an example. A procedural layout engine is used to arrange, based on the layout rule for the Jiangnan water town and the basic layout rule between the stylized target 3D models, the at least one stylized target 3D model (e.g., a river, trees, ancient buildings, etc.) densely along a virtual river channel, to form a picturesque ancient town.

For example, take the target layout algorithm being a rule for layout for an industrialized urban area as an example. A procedural layout engine is used to stack, based on the layout rule for the industrialized urban area and the basic layout rule between the stylized target 3D models, the at least one stylized target 3D model (e.g., factories, clock towers, and residences) by high and low together, to form a vast and complex industrial urban area.

According to the technical solution in accordance with the embodiments of the present disclosure, since the at least one target 3D model may be arranged based on the acquired target layout algorithm and the basic layout rule, the generated digital layout blueprint complies with the constraints of the target layout algorithm and the basic layout rule, so that the generated digital layout blueprint is more reasonable and aesthetically pleasing, helping improve the user's visual experience.

As shown in FIG. 6, based on the embodiment shown in FIG. 2, the step 205 may specifically include step 2051 and step 2052 as follows.

### Step 2051, Performing target processing on the arranged at least one target 3D model

The target processing includes at least one of: culling an occluded 3D model from the at least one target 3D model, and combining 3D models with identical materials and identical structures among the target 3D models.

For example, take the target processing being culling an occluded 3D model from the at least one target 3D model as an example. After arranging the at least one target 3D model, it may be pre-calculated whether there is a 3D model invisible due to being occluded by any other 3D models when viewed from a perspective to be rendered. If there is an occluded 3D model, the occluded 3D model may be culled. If there is no occluded 3D model, the number of the at least one target 3D model remains unchanged.

For example, take the target processing being combining 3D models with identical materials and identical structures among the target 3D models as an example. After arranging the at least one target 3D model, all target 3D models are traversed, to identify whether there are target 3D models with identical structures and identical materials. After identifying multiple target 3D models using identical structures and identical materials, all the multiple target 3D models using identical structures and identical materials are combined, i.e., all the multiple target 3D models using identical structures and identical materials are treated as one group of 3D models, for example, 100 urban street lamps, or 1000 trees in a forest, that are to be rendered by one drawing command Draw Call.

In other embodiments, multiple geometric models of different complexity levels (i.e., different levels of detail) may be pre-created for the same object based on a Level of Detail (LOD) algorithm, wherein the geometric models of different complexity levels correspond to geometric structures of different complexity and materials of different complexity. Therefore, each of the at least one target 3D model may include multiple geometric models of different complexity levels, for example, high-complexity models or low-complexity models. Thus, 3D models of different complexity levels corresponding to each object may be dynamically switched according to a perspective to be rendered (i.e., distance to a virtual camera), to ensure visual realism of near-view and far-view objects, and to avoid subsequent rendering of a large number of high-detail 3D models.

It should be noted that when the target processing includes both culling an occluded 3D model from the at least one target 3D model and combining 3D models with identical materials and identical structures among the target 3D models, the step of combining 3D models with identical materials and identical structures among the target 3D models may be executed first, followed by the step of culling an occluded 3D model from the at least one target 3D model; alternatively, the step of culling an occluded 3D model from the at least one target 3D model may be executed first, followed by the step of combining 3D models with identical materials and identical structures among the target 3D models. Specifics may be determined according to actual usage situations, and are not limited in embodiments of the present disclosure.

### Step 2052, Performing real-time rendering and display of the processed at least one target 3D model

In some embodiments, after culling an occluded 3D model from the at least one target 3D model, for the combined target 3D models with identical structures and identical materials, a CPU sends a single unified Draw Call to a graphics processing unit (GPU), thereby performing, using a real-time 3D rendering engine, unified parallel real-time rendering of the combined target 3D models with identical structures and identical materials at a preset frame rate through the GPU based on the preset views (i.e., the preset virtual camera position and orientation), and performing real-time rendering of any other target 3D models, to generate 2D images and display the 2D images in real time on a display device (i.e., in-vehicle terminal). Thus, while the vehicle is driving, an immersive, dynamic, stylized virtual world corresponding to the external world may be presented on an in-vehicle screen as the environment where the vehicle is located changes. For the specific implementation of rendering technology, reference may be made to detailed description in related technologies, which is not repeated here in embodiments of the present disclosure.

Furthermore, during the rendering process, some special effects may also be added. For example, when performing real-time rendering of at least one target 3D model of the steampunk style, animation effects such as steam particles may be added, to further enhance the atmosphere of a steampunk world.

For the technical solution in accordance with the embodiments of the present disclosure enables, on one hand, since an occluded 3D model may be culled from the arranged at least one target 3D model, the number of models that need to be rendered is effectively reduced, thereby avoiding subsequent unnecessary rendering calculations; and on the other hand, since 3D models with identical materials and identical structures among the at least one target 3D model may be combined, multiple Draw Calls may be compressed into a single Draw Call during rendering, therefore enabling parallel processing of 3D models with identical materials and identical structures, which enables to significantly reduce CPU overhead. Thus, in the context of limited resources on an in-vehicle platform, rendering overhead may be reduced, to ensure smooth real-time rendering.

### Exemplary Apparatus

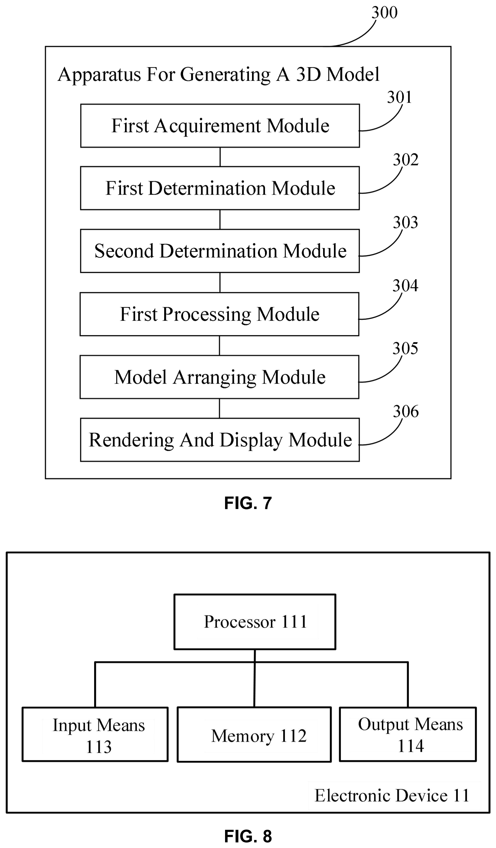

FIG. 7 is a schematic structural diagram of an apparatus for generating a 3D model in accordance with an exemplary embodiment of the present disclosure. The apparatus may be set in electronic devices such as terminal devices and servers, or on objects such as vehicles, to execute the method for generating a 3D model according to any one of the embodiments of the present disclosure.

As shown in FIG. 7, the apparatus 300 may include: a first acquirement module 301, which may be configured to acquire at least one 3D base model corresponding to a current environment where a vehicle is located, and a basic layout rule for the at least one 3D base model; a first determination module 302, which may be configured to, determine, in response to received user-input style description content, a target style for the at least one 3D base model; a second determination module 303, which may be configured to determine, based on the target style, at least one set of texture files matching the target style; a first processing module 304, which may be configured to apply the at least one set of texture files to a respective 3D base model of the at least one 3D base model, to obtain at least one target 3D model of the target style; a model arranging module 305, which may be configured to arrange the at least one target 3D model based on the basic layout rule; a rendering and display module 306, which may be configured to perform real-time rendering and display of the arranged at least one target 3D model.

In a possible implementation, the second determination module 303 may be specifically configured to: perform multi-view rendering of a target 3D base model, to obtain multiple 2D reference images, wherein the target 3D base model is any one of the at least one 3D base model, and the multiple 2D reference images correspond respectively to the different views; guide, using the target style, a preset image generation model to process the multiple 2D reference images, to generate multiple 2D architectural images matching the target style; and process the multiple 2D architectural images based on a preset material generation model, to obtain a first set of texture files matching the target style, wherein the first set of texture files is any one set of texture files of the at least one set of texture files.

In a possible implementation, the second determination module 303 may be specifically configured to: render a respective one of the at least one target 3D model according to the preset multiple views, to generate multiple 2D rendered images; determine a perceptual loss based on the multiple 2D rendered images and the corresponding multiple 2D reference images; and adjust the first set of texture files using the perceptual loss, to minimize a perceptual loss corresponding to the adjusted first set of texture files.

In a possible implementation, the first processing module 304 may be specifically configured to: in response to a plurality of sets of texture files of a plurality of styles including the target style being pre-stored in a cloud, acquire, from the plurality of sets of texture files, the at least one set of texture files matching the target style, and apply the at least one set of texture files to the respective 3D base model of the at least one 3D base model, to obtain the at least one target 3D model of the target style; or in response to a plurality of 3D models, with different styles applied, for different geographical locations being pre-stored in a cloud, acquire, from the plurality of 3D models, the at least one target 3D model matching the current environment and the target style.

In a possible implementation, the first determination module 302 may be specifically configured to: process, in response to the user-input style description content, the style description content based on a preset large language model, to obtain visual descriptors; and determine the target style based on the visual descriptors.

In a possible implementation, the model arranging module 305 is specifically configured to: acquire a preset target layout algorithm; and arrange the at least one target 3D model based on the target layout algorithm and the basic layout rule.

In a possible implementation, the rendering and display module 306 is specifically configured to: perform target processing on the arranged at least one target 3D model, wherein the target processing includes at least one of: culling an occluded 3D model from the at least one target 3D model, and combining 3D models with identical materials and identical structures among the target 3D models; and perform real-time rendering and display of the processed at least one target 3D model.

For beneficial technical effects corresponding to the exemplary embodiments of the apparatus, reference may be made to respective beneficial technical effects in the exemplary method section, which are not repeated here.

### Exemplary Electronic Device

FIG. 8 is a structural diagram of an electronic device in accordance with an embodiment of the present disclosure, including at least one processor 111 and a memory 112.

The processor 111 may be a Central Processing Unit (CPU) or other forms of processing units with data processing capabilities and/or instruction execution capabilities, and may control other components in the electronic device 11 to perform desired functions.

The memory 112 may include one or more computer program products. The computer program products may include various forms of computer-readable storage media, such as transitory memory and/or non-transitory memory. The transitory memory may include, for example, Random Access Memory (RAM) and/or cache memory, etc. The non-transitory memory may include, for example, Read-Only Memory (ROM), hard disk, flash memory, etc. One or more computer program instructions may be stored on the computer-readable storage medium. The processor 111 may run the one or more computer program instructions to implement the method for generating a 3D model according to the various embodiments of the present disclosure described above and/or other desired functions.

In an example, the electronic device 11 may further include: an input means 113 and an output means 114. These components are interconnected via a bus system and/or other forms of connection mechanisms (not shown).

The input means 113 may include various sensors, including but not limited to: ranging sensors for detecting the distance between a target object and the vehicle; image sensors for collecting surrounding environmental information of the vehicle. In some examples, the input means may also include pressure sensors for detecting seat pressure to determine if there are passengers, and passenger locations; temperature sensors for monitoring cabin temperature; humidity sensors for monitoring cabin humidity, assisting in adjusting the environment inside the vehicle; air quality sensors for monitoring air quality inside the vehicle, such as carbon dioxide, volatile organic compounds (VOCs), etc.; light sensors for detecting light intensity inside and outside the vehicle; acceleration sensors for detecting acceleration changes of the vehicle; distance sensors for detecting distance between the vehicle and other objects; touch screen sensors for interaction with the vehicle's infotainment system; biometric sensors, such as fingerprint recognition, facial recognition, etc.; heart rate monitors for monitoring the driver's heart rate; sound sensors for speech recognition and interaction, enabling speech control functions; seat sensors for monitoring seat usage, such as whether a seat is occupied and the passenger's body type; wireless communication sensors, such as Bluetooth, Wi-Fi, etc., for connecting with smart devices, enabling data transmission and remote control. In addition to the examples given above, the input means may include more or fewer sensors, which are not repeated here.

The output means 114 may output various information or signals to other hardware or devices. Other hardware or devices may include a display, an in-vehicle audio system, seats, windows, steering wheels, etc., as well as communication networks and remote output means connected to them, wherein the display may include multiple different display screens such as driver's display screen, passenger display screen, and backseat display screen. The in-vehicle audio system may include multiple loudspeakers installed at different positions inside the vehicle cabin. Different display screens or loudspeakers may all work independently.

Of course, to simplify, FIG. 8 shows only some of the components in the electronic device 8 related to the present disclosure, omitting components such as buses, input/output interfaces, etc. In addition, according to specific application situations, the electronic device 8 may also include any other appropriate components.

### Exemplary Computer Program Product and Computer-Readable Storage Medium

Besides the methods and devices, embodiments of the present disclosure may also provide a computer program product, including computer program instructions. When the computer program instructions are executed by a processor, the processor is enabled to execute the steps of the method for generating a 3D model of the various embodiments of the present disclosure described in the "Exemplary Method" section.

The computer program product may be written in any combination of one or more programming languages to generate program code for performing the operations of the embodiments of the present disclosure. The programming languages include object-oriented programming languages, such as Java, C++, etc., and also include conventional procedural programming languages, such as the "C" language or similar programming languages. The program code may be executed entirely on the user's computing device, partly on the user's device, executed as an independent software package, executed partly on the user's computing device and partly on a remote computing device, or executed entirely on the remote computing device or server.

Furthermore, embodiments of the present disclosure may also be a computer-readable storage medium having computer program instructions stored thereon. When the computer program instructions are executed by a processor, the processor is enabled to execute the steps of the method for generating a 3D model of the various embodiments of the present disclosure described in the "Exemplary Method" section.

The computer-readable storage medium may be any combination of one or more readable media. The readable medium may be a readable signal medium or a readable storage medium. The readable storage medium may be, for example, but not limited to, an electrical, magnetic, optical, electromagnetic, infrared, or semiconductor system, apparatus, or device, or any combination of the above. More specific examples (a non-exhaustive list) of the readable storage medium include: electrical connections with one or more wires, portable disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above.

The basic principles of the present disclosure have been described above in conjunction with specific embodiments. However, it should be noted that the advantages, benefits, effects, etc. mentioned in the present disclosure are only examples and are not limiting, and cannot be considered essential in the various embodiments of the present disclosure. In addition, the specific details disclosed above are only for the purpose of examples and ease of understanding, and are not limiting. The details do not limit that the present disclosure has to be implemented using the specific details described above.

Those skilled in the art may make various modifications and changes to the present disclosure without departing from the spirit and scope of the present application. In this way, if these modifications and variations of the present application fall within the scope of the claims of the present disclosure and their equivalent technologies, the present disclosure also intends to cover these modifications and variations.

## Claims

1. A method for generating a 3D model, **characterized by** comprising:
acquiring (201) at least one 3D base model corresponding to a current environment where a vehicle is located, and a basic layout rule for the at least one 3D base model;
determining (202), in response to received user-input style description content, a target style for the at least one 3D base model;
determining (203), based on the target style, at least one set of texture files matching the target style, and applying the at least one set of texture files to a respective 3D base model of the at least one 3D base model, to obtain at least one target 3D model of the target style, wherein the one set of texture files comprise maps for the 3D model from different views;
arranging (204) the at least one target 3D model based on the basic layout rule; and
performing (205) real-time rendering and display of the arranged at least one target 3D model.

2. The method according to claim 1, wherein the determining (203), based on the target style, at least one set of texture files matching the target style comprises:
performing (2031) multi-view rendering of a target 3D base model, to obtain multiple 2D reference images, wherein the target 3D base model is any one of the at least one 3D base model, and the multiple 2D reference images correspond respectively to the different views;
guiding (2032), using the target style, a preset image generation model to process the multiple 2D reference images, to generate multiple 2D architectural images matching the target style; and
processing (2033) the multiple 2D architectural images based on a preset material generation model, to obtain a first set of texture files matching the target style, wherein the first set of texture files is any one set of texture files of the at least one set of texture files.

3. The method according to claim 2, wherein the processing (2033) the multiple 2D architectural images based on a preset material generation model, to obtain a first set of texture files matching the target style comprises:
rendering a respective one of the at least one target 3D model according to the preset multiple views, to generate multiple 2D rendered images;
determining a perceptual loss based on the multiple 2D rendered images and the corresponding multiple 2D reference images; and
adjusting the first set of texture files using the perceptual loss, to minimize a perceptual loss corresponding to the adjusted first set of texture files.

4. The method according to claim 1, wherein the applying the at least one set of texture files to a respective 3D base model of the at least one 3D base model, to obtain at least one target 3D model of the target style comprises:
in response to a plurality of sets of texture files of a plurality of styles comprising the target style being pre-stored in a cloud, acquiring, from the plurality of sets of texture files, the at least one set of texture files matching the target style, and applying the at least one set of texture files to the respective 3D base model of the at least one 3D base model, to obtain the at least one target 3D model of the target style; or
in response to a plurality of 3D models, with different styles applied, for different geographical locations being pre-stored in a cloud, acquiring, from the plurality of 3D models, the at least one target 3D model matching the current environment and the target style.

5. The method according to claim 1, wherein the determining (202), in response to received user-input style description content, a target style for the at least one 3D base model comprises:
processing (2021), in response to the user-input style description content, the style description content based on a preset large language model, to obtain visual descriptors; and
determining (2022) the target style based on the visual descriptors.

6. The method according to claim 1, wherein the arranging (204) the at least one target 3D model based on the basic layout rule comprises:
acquiring (2041) a preset target layout algorithm; and
arranging (2042) the at least one target 3D model based on the target layout algorithm and the basic layout rule.

7. The method according to claim 1, wherein the performing (205) real-time rendering and display of the arranged at least one target 3D model comprises:
performing (2051) target processing on the arranged at least one target 3D model, wherein the target processing comprises at least one of: culling an occluded 3D model from the at least one target 3D model, and combining 3D models with identical materials and identical structures among the target 3D models; and
performing (2052) real-time rendering and display of the processed at least one target 3D model.

8. An apparatus (300) for generating a 3D model, **characterized by** comprising:
a first acquirement module (301), configured to acquire at least one 3D base model corresponding to a current environment where a vehicle is located, and a basic layout rule for the at least one 3D base model;
a first determination module (302), configured to, determine, in response to received user-input style description content, a target style for the at least one 3D base model;
a second determination module (303), configured to determine, based on the target style, at least one set of texture files matching the target style;
a first processing module (304), configured to apply the at least one set of texture files to a respective 3D base model of the at least one 3D base model, to obtain at least one target 3D model of the target style;
a model arranging module (305), configured to arrange the at least one target 3D model based on the basic layout rule; and
a rendering and display module (306), configured to perform real-time rendering and display of the arranged at least one target 3D model.

9. The apparatus (300) according to claim 8, wherein the second determination module (303) is configured to determine, based on the target style, at least one set of texture files matching the target style by:
performing multi-view rendering of a target 3D base model, to obtain multiple 2D reference images, wherein the target 3D base model is any one of the at least one 3D base model, and the multiple 2D reference images correspond respectively to the different views;
guiding, using the target style, a preset image generation model to process the multiple 2D reference images, to generate multiple 2D architectural images matching the target style; and
processing the multiple 2D architectural images based on a preset material generation model, to obtain a first set of texture files matching the target style, wherein the first set of texture files is any one set of texture files of the at least one set of texture files.

10. The apparatus (300) according to claim 9, wherein the processing the multiple 2D architectural images based on a preset material generation model, to obtain a first set of texture files matching the target style comprises:
rendering a respective one of the at least one target 3D model according to the preset multiple views, to generate multiple 2D rendered images;
determining a perceptual loss based on the multiple 2D rendered images and the corresponding multiple 2D reference images; and
adjusting the first set of texture files using the perceptual loss, to minimize a perceptual loss corresponding to the adjusted first set of texture files.

11. The apparatus (300) according to claim 8, wherein the first processing module (304) is configured to apply the at least one set of texture files to a respective 3D base model of the at least one 3D base model, to obtain at least one target 3D model of the target style by:
in response to a plurality of sets of texture files of a plurality of styles comprising the target style being pre-stored in a cloud, acquiring, from the plurality of sets of texture files, the at least one set of texture files matching the target style, and applying the at least one set of texture files to the respective 3D base model of the at least one 3D base model, to obtain the at least one target 3D model of the target style; or
in response to a plurality of 3D models, with different styles applied, for different geographical locations being pre-stored in a cloud, acquiring, from the plurality of 3D models, the at least one target 3D model matching the current environment and the target style.

12. The apparatus (300) according to claim 8, wherein the first determination module (302) is configured to determine, in response to received user-input style description content, a target style for the at least one 3D base model by:
processing, in response to the user-input style description content, the style description content based on a preset large language model, to obtain visual descriptors; and
determining the target style based on the visual descriptors.

13. The apparatus (300) according to claim 8, wherein the model arranging module (305) is configured to arrange the at least one target 3D model based on the basic layout rule by:
acquiring a preset target layout algorithm; and
arranging the at least one target 3D model based on the target layout algorithm and the basic layout rule.

14. A non-transitory computer-readable storage medium, on which a computer program is stored, **characterized by** that the computer program, when executed by a processor (111), causes the processor (111) to implement the method for generating a 3D model according to any one of claims 1 to 7.

15. An electronic device (11), **characterized by** comprising:
a processor (111); and
a memory (112) for storing processor (111)-executable instructions,
wherein the processor (111) is configured to read the executable instructions from the memory (112) and execute the instructions to implement the method for generating a 3D model according to any one of claims 1 to 7.
